# EUROPEAN PATENT SPECIFICATION

(11) **EP 4 416 056 B1**
(45) Date of publication and mention of the grant of the patent: **29.04.2026**
(21) Application number: 22800291.1
(22) Date of filing: 17.10.2022
(51) Int. Cl.: B64D 37/00, B64D 41/00

(54) **METHOD AND SYSTEM FOR TRANSMITTING ENERGY**
VERFAHREN UND SYSTEM ZUM ÜBERTRAGEN VON ENERGIE
PROCÉDÉ ET SYSTÈME DE TRANSMISSION D'ÉNERGIE

(30) Priority: 15.10.2021 EP 21202980
(43) Date of publication of application: 21.08.2024
(73) Proprietor: Hyviate GmbH, 82234 Weßling (DE)
(72) Inventor: BECKERS, Wouter, 82024 Taufkirchen (DE)
(74) Representative: Grünecker Patent- und Rechtsanwälte PartG mbB
(86) International application number: PCT/EP2022/078848
(87) International publication number: WO 2023/062243

(56) References cited:
- EP-A1- 2 455 336
- CN-U- 212 250 268
- US-A- 3 951 362
- US-A1- 2014 339 367

## Description

### TECHNICAL FIELD

The invention relates to a method and system for transmitting energy.

### BACKGROUND ART

Energy can be abundant at a distance from where it is required, especially renewable energy such as solar, wind, hydro and geothermal. Infrastructure that generates electricity from non-renewable energy sources may also be centralized and removed from population centers to enable capture and control of waste and greenhouse gases. Commonly, electricity from these sources is transmitted to population centers by cables and distributed through an electrical network. Portable batteries can be charged from the network to enable further distribution of the energy.

Additionally, hydrocarbons are used as an energy source that can be distributed using pipes and containers, to be oxidized to generate electrical and mechanical energy where required. Hydrogen has been proposed as a clean alternative to hydrocarbons that does not generate pollution when oxidized.

WO 2010 051088 A1 discloses a method according to the preamble of claim 1, and proposes to use geothermal, wind, solar, wave tidal or hydropower to generate electricity in-situ or very near to the primary energy sources, to use the electricity to produce hydrogen directly from water, and to deliver the hydrogen from the place where it is produced to the place where it is needed using an airship in which the hydrogen gas can also be used for generating lift, providing propulsion energy and serving ancillary needs.

EP 2 455 336 A1 discloses a method for transmitting energy according to the preamble of claim 1.

CN 212 250 268 U discloses a fuel supply device which is used for conveying fuel in a liquefied gas storage tank to a vehicle power module and comprises at least two fluid communication flow paths communicated with a low-pressure gas buffer module, and the low-pressure gas buffer module is connected to the vehicle power module. Wherein the first fluid communication flow path is used for receiving boil-off gas of the liquefied gas storage tank, and the second fluid communication flow path is used for receiving liquefied gas from the liquefied gas storage tank and heating the liquefied gas storage tank to form gasified gas; the heat exchange flow path is communicated with the second fluid communication flow path for heat transfer; the system further comprises a high-pressure gas storage module, and the high-pressure gas storage module is used for supplying high-pressure gas fuel to the vehicle power module. The fuel supply device disclosed by the utility model is integrated.

US 3 951 362 A discloses a cryogenic fuel tank is of a cylindrical design having toroidal surface ends, is suspended in aircraft structure through a central front mount member; and the rear of the tank is supported by rod elements which extend: from a mounting ring about the tank, to mount points rearwardly within the interior of the fuselage.

US 2014/339367 A1 discloses a hybrid fuel airplane and methods are presented. A cryogenic fuel is transferred to an airplane propulsor from an airplane fuel system comprising a cryogenic fuel tank and a jet fuel tank. The cryogenic fuel tank conforms to an outer mold line and carries a cryogenic fuel, and is located in a portion of the airplane body while not extending beyond the outer mold line. The jet fuel tank carries a jet fuel and is located in an airplane wing, or an airplane body, or both. A dynamic aircraft load is born on the cryogenic fuel tank, and the airplane propulsor is operated using the cryogenic fuel to generate thrust for the hybrid fuel airplane.

### SUMMARY OF INVENTION

The airship of WO 2010 051088 A1 carries hydrogen in a mix of tanks and bladders at high, low and near ambient pressures. Therefore, energy must be consumed to pump the low and near ambient pressure hydrogen for further distribution in pipes and containers. This reduces the energy available for use.

It is an object of the invention to transmit energy in a manner that increases the amount of useful energy that is made available at a location that is removed from an energy source.

The claimed invention proposes a method transmitting energy according to claim 1.

Since the transmitted portion is transferred from the tank at the second location in liquid form, the pumping work to consume or distribute the hydrogen at the second location can be reduced. The liquefaction that enables the pumping work to be reduced is carried out prior to transporting, so that it does not reduce an amount of energy made available at the second location from the transmitted portion. In other words, the invention exploits the abundance of energy at the first location to put the hydrogen in a form that increases the energy made available at the second location. Furthermore, the tank is transported using an airplane so that the transportation step can be carried out quickly, reducing an amount of time that the hydrogen in the tank absorbs heat, so that boiling of the liquid hydrogen can be reduced, and reduction of the amount of liquid hydrogen that is transmitted can be suppressed.

The tank has a modular structure, and is attached to the airplane after the first transferring step and detached from the airplane before the second transferring step. This makes it possible to use the tank for storage at the second location, without requiring the airplane.

Liquid hydrogen is transported in two or more tanks in the airplane in the transporting step.

This enables pressure in the tanks and trim of the airplane to be managed more easily.

Preferably, in the transporting step, hydrogen is discharged from the tank and oxidized to provide thrust and/or auxiliary power to the airplane.

By utilizing the hydrogen from the tank for thrust and/or auxiliary power, energy and power systems in the airplane can be simplified. Furthermore, the discharge can reduce any increase in pressure in the tank due to boil-off.

Preferably, the hydrogen is discharged from the tank as liquid hydrogen and gasified prior to oxidation, and latent heat of evaporation of the hydrogen that is discharged from the tank is used to cool an airplane system and/or the transmitted portion.

By utilizing the latent heat of evaporation of the discharged hydrogen to cool the airplane system and/or the transmitted portion during the transportation step, airplane performance can be increased and/or boil off of the liquid hydrogen can be further suppressed, so that a reduction of the amount of liquid hydrogen that is transmitted can be further avoided.

Preferably, gaseous hydrogen is discharged from the tank to the atmosphere in the transporting step.

By discharging gaseous hydrogen to the atmosphere in the transporting step, the range of pressure that the tank is subjected to during the transportation step, especially during climb and cruise of the airplane, can be suppressed using a simple structure, so that the airplane and tank can be made light, increasing the efficiency of the transportation step.

Preferably, the method further comprises carrying out a control to prevent gauge pressure in the tank falling below a predetermined pressure in the transporting step, wherein the control consists of increasing a supply of heat to the tank and/or transferring hydrogen to the tank from an auxiliary tank, an evaporation circuit, or a heat exchanger.

By thus increasing the supply of heat to the tank and/or transferring hydrogen to the tank from the auxiliary tank, the range of pressure that the tank is subjected to is reduced, so that the tank can be made light, increasing the efficiency of the transportation step.

Preferably, in the second transferring step, the liquid hydrogen is pumped from the tank directly to another tank on another airplane, and the gasification and oxidation steps take place on the other airplane. This minimizes storage and transfer steps so that boil-off can be reduced, allowing a maximum amount of energy to be made available to the airplane.

Preferably, the mass of the transmitted portion is greater than 30 percent of the empty weight of the airplane.

The present invention further claims a system according to claim 9.

Preferably, the airplane is configured to oxidize hydrogen from the tank to provide thrust and/or auxiliary power to the airplane.

Preferably, the airplane is further configured to use the latent heat of evaporation of liquid hydrogen that is drawn from the tank to cool an airplane system and/or a portion of liquid hydrogen that is retained in, or returned to, the tank.

Preferably, the airplane further comprises means for increasing a supply of heat to the tank and/or for transferring hydrogen to the tank from an auxiliary tank, an evaporation circuit or a heat exchanger, and a control device configured to actuate the means to prevent gauge pressure in the tank falling below a predetermined pressure.

These systems enable the advantages of the corresponding methods to be achieved.

Preferably, the tank is exposed to the outside of the airplane, and has an electric heater configured to heat an outer surface of the tank that is exposed to the outside of the airplane. The heater enables icing on the surface of the tank to be suppressed.

### BRIEF DESCRIPTION OF DRAWINGS

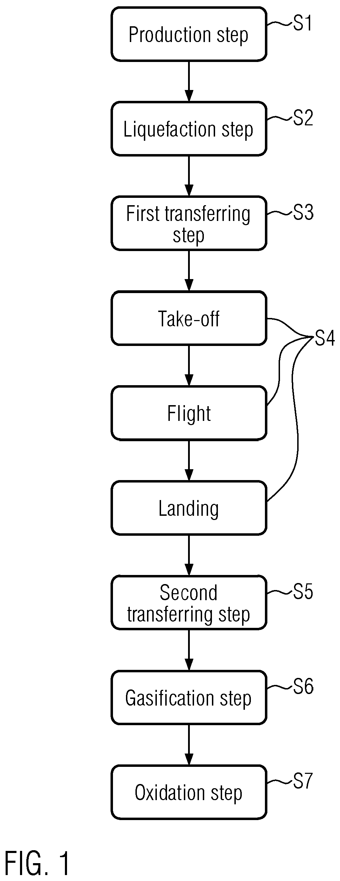

Fig. 1 is a diagram indicating the sequence of steps in a first and second embodiment of the invention

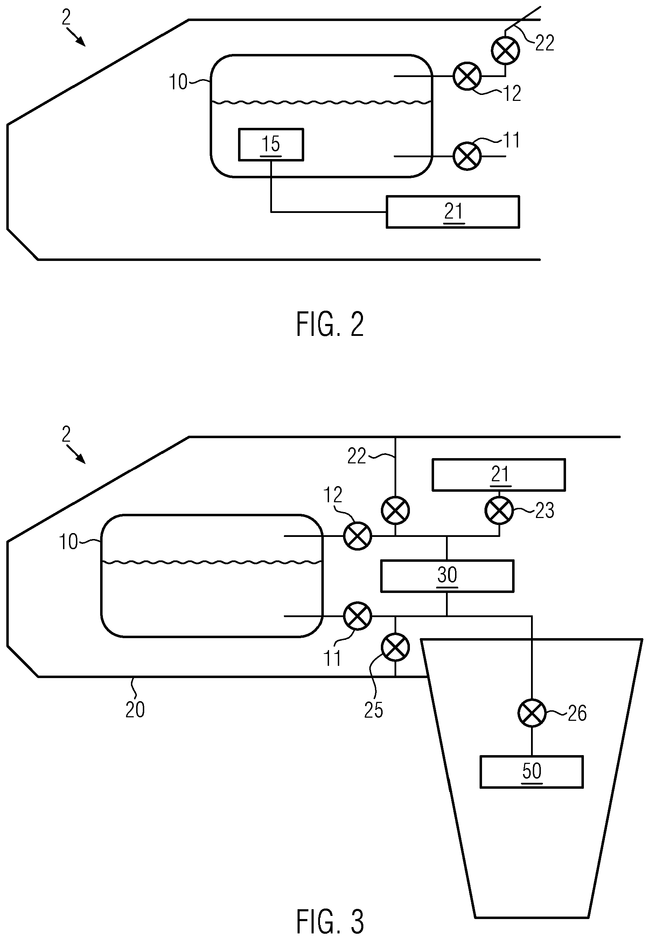

Fig. 2 is a schematic diagram showing elements of a tank and airplane that is used in the first embodiment
Fig. 3 is a schematic diagram showing elements of an airplane that is used in the a related example that is not part of the invention
Fig. 4(a) is a schematic diagram showing elements of an airplane and tank during loading in accordance with a second embodiment of the invention
Fig. 4(b) is a schematic diagram showing elements of the airplane and tank after loading in accordance with the second embodiment of the invention

### DESCRIPTION OF EMBODIMENTS

A first embodiment of the invention is carried out as follows.

In a production step S1, electricity is preferably generated from a renewable source such as wind, solar, geothermal or hydro power. However, the source of the electricity is not particularly limited. The electricity is then used to produce hydrogen from water through electrolysis.

Alternatively, hydrogen can be extracted from fossil fuels or biomass, e.g. by steam methane reforming, coal gasification, or biomass gasification.

Then, in a liquefaction step S2, the hydrogen is liquefied using conventional processes.

The liquefied hydrogen is then transferred into a tank 10 at a first location. This constitutes a first transfer step S3 using a first transfer means. The liquefied hydrogen may be in a slush mixed with frozen hydrogen.

The tank 10 has double-walled, partial vacuum insulation, has gas and liquid outlets 11,12, has a vacuum relief valve, and has an electric heater 15.

The tank 10 is then moved to an airplane 2 with an unpressurized compartment into which the tank 10 is loaded, physically secured and grounded. The airplane has a boil-off circuit 22 to which the gas outlet 12 of the tank 10 is attached so that gas can be discharged from the tank 10 to the boil-off circuit 22, and thence to the atmosphere. The airplane 2 also has an auxiliary electric power supply 21 that is connected to the electrical heater 15 of the tank 10.

The airplane 2 then flies the tank 10 to another location, the flight including take-off, climb, cruise, descent and landing.

During climb, a gauge pressure in the tank 10 increases due to boiling and a reduction in ambient pressure with altitude. At this time, gas is discharged from the tank 10 to the atmosphere using the boil-off circuit 22, so as to suppress the increase in gauge pressure and avoid excessive structural loads on the tank 10.

During subsequent cruise at altitude, additional gas can be discharged from the tank 10 to the boil-off circuit 22, and thence to the atmosphere, in order to continue to suppress the gauge pressure, depending on the boil-off rate and duration of the cruise.

During descent, the gauge pressure in the tank 10 decreases due to the reduction in ambient pressure. At this time, the electrical heater 15 is powered to increase the heat supplied to the liquid hydrogen in the tank 10 in order to increase the boil-off rate and thus increase the absolute pressure in the tank 10, so as to maintain a positive gauge pressure in the tank 10 to prevent buckling and excessive structural loads.

After landing, the boil off circuit and auxiliary power supply are disconnected from the tank 10, and the tank 10 is removed from the airplane 2. The tank 10 is then moved to a second location where a second transfer step is carried out.

In the second transfer step, a second transfer means transfers the liquid hydrogen from the tank 10 to be distributed and consumed through conventional means. For example, the hydrogen may be transferred into a highly insulated fixed storage tank from which gaseous and liquid hydrogen may be intermittently supplied, according to demand. The liquid hydrogen may also be transferred into insulated portable tanks adapted for road or rail transportation, to transport the liquid hydrogen on further prior to gasification and oxidation. The liquid hydrogen may also be directly transferred through a gasifier into an industrial process or pipeline. The liquid hydrogen may also be directly transferred into a tank of a vehicle, especially an airplane 2, that subsequently gasifies and oxidizes the hydrogen for power.

After the second transfer step, the tank 10 can be transported back to the first location or to different location in the vicinity of a different energy source, using various means, including the airplane 2. At this time, a quantity of hydrogen may be retained in the tank 10 to prevent contamination. If liquid hydrogen is retained, a latent heat of vaporization of the liquid hydrogen can be used to help maintain a low temperature in the tank 10 until it is filled again. Alternatively, the tank 10 may be purged with an inert gas.

In a modification of the first embodiment the compartment of the airplane 2 into which the tank 10 is loaded is at least partially pressurized. The pressurization of the compartment reduces a variation in the gauge pressure in the tank 10 during the flight, so that a boil-off circuit 22 may not be required. Instead, the tank 10 may be designed to withstand the expected variations in gauge pressure over the light, and/or to release a small amount of gaseous hydrogen inside the compartment, to be dispersed by the ventilation provided by the pressurization system.

In the first embodiment, the tank 10 is a first tank 10, and one or more additional tanks containing liquid hydrogen is loaded into the compartment and flown with the airplane 2 in the transportation step. The boil-off circuit 22 and auxiliary power supply has connections for each tank. The one or more additional tanks may be unloaded with the first tank 10, or retained to subsequently be flown in the airplane 2 and unloaded at a different location. The one or more additional tanks may thus transport liquid hydrogen to a third location.

In a related example that is not part of the invention, production and liquefaction steps are the same as in the first embodiment. The liquefied hydrogen is then transferred into a tank 10 at a first location. This constitutes a first transfer step using a first transfer means. However, unlike the first embodiment, the tank 10 is integrated with an airplane 2 throughout the method.

The tank 10 has a single metal wall with an outer surface to which a foam insulation is attached. In order to strengthen the attachment between the metal and the foam, the outer surface is texturized by a laser to provide a physical interlock between the foam and the metal. The tank 10 has gas and liquid outlets 11,12, and a vacuum relief valve. The tank 10 is fixed inside a fuselage 20 of the airplane 2.

The gas outlet 12 is connected to a gaseous circuit in the airplane 2. The gaseous circuit includes a boil-off circuit 22 which can discharge gaseous hydrogen from the tank 10 to the atmosphere, and an auxiliary fuel supply circuit 23 that supplies gaseous hydrogen to an auxiliary power unit 21 in the airplane 2.

The auxiliary power unit 21 includes a fuel cell that oxidizes the hydrogen to generate electricity for auxiliary power in the airplane 2. The auxiliary power unit also includes a compressor that pressurizes air from the environment, and a heat exchanger that used the gaseous hydrogen to cool the pressurized air prior to the air and gaseous hydrogen entering the fuel cell.

The liquid outlet 11 is connected to a liquid circuit in the airplane 2. The liquid circuit includes an externally accessible connection 25 through which liquid hydrogen can be transferred to and from the tank 10 from outside the airplane 2. The liquid circuit also includes a thrust fuel supply circuit 26 that supplies hydrogen to combustors of turbofans 50 that provide thrust to the airplane 2.

The thrust fuel supply circuit 26 includes a high pressure pump that pressurizes the liquid hydrogen, and an evaporator that gasifies the pressurized liquid hydrogen using heat from the turbofan exhaust, prior to the gasified hydrogen flowing to the combustors.

The airplane 2 also has an evaporator circuit that connects to the liquid circuit to the gaseous circuit via an evaporator 30.

After the first transfer step, the airplane 2 transports the tank 10 to the second location in the transporting step, flying at least part of the way. The flight including take-off, climb, cruise, descent and landing.

Throughout the flight, the liquid hydrogen in the tank 10 boils, increasing the volume of the hydrogen. At the same time, gaseous hydrogen is discharged from the tank 10 to be consumed by the auxiliary power unit and liquid hydrogen is discharged from the tank 10 to consumed by the turbofans 50. The external pressure on the tank 10 also changes with altitude. In order to avoid excessive structural loads on the tank 10, a low positive gauge pressure is maintained throughout the flight. This is achieved by increasing amount of gaseous hydrogen that is discharged from the tank 10 when the gauge pressure is high, e.g. using the boil-off circuit 22 to discharge gaseous hydrogen to the atmosphere, and by increasing the rate of boil-off when the gauge pressure is low, namely by circulating liquid hydrogen through the evaporator 30 and returning the gasified hydrogen to the tank 10.

After landing, the airplane 2 taxis to a second location where a second transfer step is carried out. A transmitted portion of the liquid hydrogen is transferred out of the tank 10 and the airplane 2 via the externally accessible connection 25. The subsequent gasification and oxidation of the hydrogen that is transferred out of the airplane 2 are the same as in the first embodiment.

The airplane 2 then flies back to the first location or to a different location in the vicinity of a different energy source, using hydrogen that is retained in the tank 10 as fuel for the auxiliary power unit and turbofans.

In a modification of the related example that is not part of the invention, the gaseous circuit includes an auxiliary tank in which gaseous hydrogen can be stored at high pressure. The auxiliary tank can be used to store gaseous hydrogen instead of releasing it to the atmosphere via the boil-off circuit 22, to supply gaseous hydrogen to the tank 10 to suppress a reduction in gauge pressure instead of increasing the boil-off rate, and to temporarily supply gaseous hydrogen to the auxiliary power unit 21 during high fuel consumption periods.

In another modification of the related example that is not part of the invention, the tank 10 is a main tank, and the liquid circuit includes one or more smaller secondary tanks. Liquid hydrogen is pumped between the main tank and the smaller secondary tanks to maintain the main tank in a state that is nearly full of liquid hydrogen during the transportation step and that is nearly full of gaseous hydrogen during subsequent flights, thereby suppressing slosh in the main tank. The smaller size of the secondary tanks also enables them to tolerate higher pressure variations, so that they can be used to temporarily store gaseous hydrogen at higher pressures as in auxiliary tanks.

Instead of, or in addition to, using heat from the turbofan exhaust to gasify the pressurized liquid hydrogen, heat from pressurized air from a compressor of the turbofan can be used. The cooled pressurized air can be supplied to higher pressure compressor stages or the combustor, allowing a power output to be increased. The cooled pressurized air can also be used to cool bearings, turbine blades, combustor linings, etc., enabling the amount of compressed air used to cool such components to be reduced, and thus reducing the total compressor work.

The pressurized liquid hydrogen can also be gasified using heat from a closed loop helium circuit that uses electricity from the auxiliary power unit 50 to pump heat from liquid hydrogen that is circulated back to the tank 10. By thus circulating supercooled liquid hydrogen to the tank 10, boil-off can be suppressed.

Although the embodiment is described with a single gaseous circuit connected to a gas outlet 12 and single liquid circuit connected to a liquid circuit, multiple separate gaseous and liquid circuits may be used.

Instead of the turbofan 50, thrust for the airplane 2 can be produced from a turboprop, a combustion engine, or a fuel cell and electric motor. Even in these cases, the liquid hydrogen enables efficient pumping of the large amounts of hydrogen required for thrust generation.

The tank 10 may be fixed inside a non-pressurized portion of the fuselage 20, or inside a portion that is pressurized or at least partially pressurized. When the portion is pressurized or at least partially pressurized, the pressurization system can be used to control the temperature of the air between the tank 10 and the fuselage skin, to suppress ice formation, etc.

The related example that is not part of the invention may be modified to attach the tank 10 to the airplane 2 after the first transfer step S3 and to detach the tank 10 from the airplane before the second transferring step S5, rather than keeping the tank 10 integrated with the airplane 2 throughout the method. In this case the gas outlet 12 is connected to the gaseous circuit and the liquid outlet 11 connected to the liquid circuit after the first transfer step S3, and the gas outlet 12 is disconnected from the gaseous circuit and the liquid outlet 11 disconnected from the liquid circuit before the second transferring step.

In embodiments where the tank 10 is attached to the airplane after the first transfer step S3 and detached from the airplane before the second transferring step S5, the tank 10 preferably loaded into the fuselage 20 of the airplane along a longitudinal axis of the airplane. In this case, one or more outlets 11, 12 of the tank are provided at a longitudinal end of the tank 10 facing a loading direction. As the tank 10 is moved to an attachment position inside the fuselage 20 where it is attached to the airplane, the one or more outlets 11,12 engage with corresponding airplane-side inlets of the gaseous circuit, liquid circuit or boil-off circuit 22 provided inside the fuselage 20 and facing the opposite direction to form couplings. The couplings may then be locked and unlocked in response to a command from an operator. The coupling may also be locked automatically in response to the movement of the tank 10 toward the attachment position, the movement being detected by sensors detecting the position of the tank, a force in the coupling, or the like. By providing the outlets on the longitudinal end of the tank 10 facing the loading direction, a lateral dimension of the tank can be maximized, so that utilization of the fuselage volume can be increased. Furthermore, when the tank 10 is longer in the longitudinal direction of the airplane, the increased lateral dimension allows a surface area of the tank 10 to be reduced for a given volume of hydrogen, so that insulation of the hydrogen can be provided more efficiently.

Additionally, the automatic engagement and locking of the couplings reduces a need for an operator to access between the tank and the airplane, permitting further increases in the utilization of the fuselage volume.

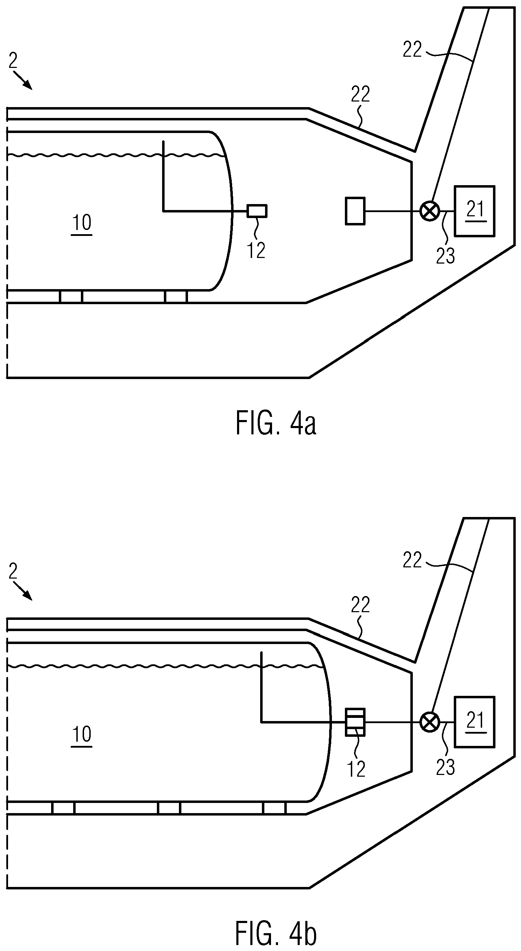

Figs. 4(a) and (b) depict a second embodiment, based on the first embodiment, with the addition of the loading and coupling along the longitudinal direction, discussed above. Figure 4(a) shows the tank 10 being loaded into the fuselage 20 of the airplane along the longitudinal axis of the airplane, the gas outlet 12 of the tank being provided at the longitudinal end of the tank 10 facing the loading direction. The tank 10 is moved along the longitudinal direction inside the fuselage, and in Figure 4(b) it reaches the attachment position inside the fuselage 20 where it is attached to the airplane and the gas outlet 12 engages with corresponding airplane-side inlet of the boil-off circuit 22 provided inside the fuselage 20 and facing the opposite direction to form a coupling. The coupling is then locked and unlocked automatically in response to a command from an operator. The coupling may also be locked automatically in response to the movement of the tank 10 toward the attachment position, the movement being detected by sensors detecting the position of the tank, a force in the coupling, or the like. The boil-off circuit 22 is part of a gaseous circuit that also includes an auxiliary fuel supply circuit 23 that supplies gaseous hydrogen to an auxiliary power unit 21 in the airplane 2.

In a modification that can be applied to both the first embodiment and the related example, tanks 10 can be mounted to the outside of the airplane 2. In this case, a boil-off circuit 22 can consist of a simple pressure relief valve that opens out into the atmosphere, and electrical heating may be provided to the outside of the tank 10 to suppress icing.

According to an embodiment which is not part of the claimed invention, the above disclosed methods and apparatus can be adapted by replacing the hydrogen with helium and removing method steps and apparatus features relating to oxidation. The resulting method and apparatus enables direct transmission of helium at high speed, so that boil off losses are reduced and a larger proportion of helium can reach a destination distant from an energy source used for the production and liquefaction.

## Claims

1. A method of transmitting energy, comprising:
a production step (S1) of producing hydrogen;
a liquefaction step (S2) of converting the hydrogen to liquid hydrogen;
a first transferring step (S3) of transferring the liquid hydrogen into a first tank (10) at a first location;
a transporting step (S4) of transporting the first tank (10) to a second location;
a second transferring step (S5) of transferring a transmitted portion of the liquid hydrogen out of the first tank (10) at the second location;
a gasification step (S6) of gasifying the transmitted portion after the second transferring step (S5);
an oxidation step (S7) of oxidizing the gasified transmitted portion to generate thermal, electrical or mechanical energy,
**characterized in that**
in the transporting step, the first tank (10) is transported using an airplane (2),
the first tank (10) has a modular structure, is attached to the airplane (2) after the first transferring step (S3) and detached from the airplane (2) before the second transferring step (S5), and
a second tank containing liquid hydrogen is transported along with the first tank in the transporting step.

2. The method according to claim 1, wherein
in the transporting step (S4), hydrogen is discharged from the first tank (10) and oxidized to provide thrust and/or auxiliary power to the airplane.

3. The method according to claim 2, wherein
the hydrogen is discharged from the first tank (10) as liquid hydrogen and gasified prior to oxidation; and
latent heat of evaporation of the hydrogen that is discharged from the first tank (10) is used to cool an airplane system and/or the transmitted portion.

4. The method according to any one of claims 1 to 3, wherein
gaseous hydrogen is discharged from the first tank (10) to the atmosphere in the transporting step (S4).

5. The method according to any one of claims 1 to 4, further comprising
carrying out a control to prevent gauge pressure in the first tank (10) falling below a predetermined pressure in the transporting step, wherein
the control consists of increasing a supply of heat to the first tank (10) and/or transferring hydrogen to the first tank (10) from an auxiliary first tank, an evaporation circuit, or a heat exchanger.

6. The method according to any one of claims 1 to 5, wherein
the first tank (10) is loaded into a fuselage (20) of the airplane (2), moved through the fuselage (20) along a longitudinal axis of the airplane (2) to an attachment position and attached to the airplane (2) at the attachment position;
as the first tank (10) moves to the attachment position, an outlet of the first tank (10) facing the movement direction engages with an airplane-side inlet facing the opposite direction to form a coupling;
the coupling is locked automatically in response to a command from an operator or the movement of the first tank (10) toward the attachment position;
hydrogen is discharged from the first tank (10) through the coupling; and
the coupling is subsequently unlocked automatically in response to a command from the operator prior to detachment of the first tank (10).

7. The method according to any one of claims 1 to 6, wherein
in the second transferring step (S5), the liquid hydrogen is pumped from the first tank (10) directly to another tank on another airplane, and
the gasification and oxidation steps (S6,S7) take place on the other airplane.

8. The method according to any one of claims 1 to 7, wherein the mass of the transmitted portion is greater than 20 percent of the empty weight of the airplane (2), preferably greater than 30 percent of the empty weight of the airplane (2).

9. A system for transmitting energy, comprising:
means for producing and liquefying hydrogen;
first transferring means configured to transfer liquid hydrogen into a first tank at a first location;
the first tank (10) and a second tank;
an airplane (2) capable of flying the first tank (10);
second transferring means configured to transfer a transmitted portion of the liquid hydrogen out of the first tank (10) at a second location; and
gasification means configured to gasify the transmitted portion; and
oxidation means configured to oxidize the gasified portion to generate thermal, electrical or mechanical energy,
**characterized in that**
the first tank (10) is configured to be attached to, and detached from, the airplane (2) while containing liquid hydrogen, and
the airplane (2) is configured to transport a second tank containing liquid hydrogen along with the first tank (10).

10. The system according to claim 9, wherein
the airplane (2) is configured to oxidize hydrogen from the tank (10) to provide thrust and/or auxiliary power to the airplane.

11. The system according to claim 9 or 10, wherein the airplane (2) is further configured to use the latent heat of evaporation of liquid hydrogen that is drawn from the tank to cool an airplane system and/or a portion of liquid hydrogen that is retained in, or returned to, the tank.

12. The system according to any one of claims 9 to 11, wherein the airplane (2) further comprises
means for increasing a supply of heat to the tank (10) and/or transferring hydrogen to the tank from an auxiliary tank, an evaporation circuit, or a heat exchanger; and
a control device configured to actuate the means to prevent gauge pressure in the at least one tank falling below a predetermined pressure during flight.

## Patentansprüche

1. Ein Verfahren zum Übertragen von Energie, umfassend:
einen Erzeugungsschritt (S1) zum Erzeugen von Wasserstoff;
einen Verflüssigungsschritt (S2) zum Umwandeln des Wasserstoffs in flüssigen Wasserstoff;
einen ersten Übertragungsschritt (S3) zum Übertragen des flüssigen Wasserstoffs in einen ersten Tank (10) an einem ersten Ort;
einen Transportschritt (S4) zum Transportieren des ersten Tanks (10) zu einem zweiten Ort;
einen zweiten Übertragungsschritt (S5) zum Übertragen eines übertragenen Teils des flüssigen Wasserstoffs aus dem ersten Tank (10) an dem zweiten Ort;
einen Vergasungsschritt (S6) zum Vergasen des übertragenen Teils nach dem zweiten Übertragungsschritt (S5);
einen Oxidationsschritt (S7) zum Oxidieren des vergasten übertragenen Teils, um thermische, elektrische oder mechanische Energie zu erzeugen,
**dadurch gekennzeichnet, dass**
im Transportschritt der erste Tank (10) unter Verwendung eines Flugzeugs (2) transportiert wird,
der erste Tank (10) eine modulare Struktur aufweist, nach dem ersten Übertragungsschritt (S3) an dem Flugzeug (2) befestigt und vor dem zweiten Übertragungsschritt (S5) von dem Flugzeug (2) gelöst wird, und
ein zweiter Tank, der flüssigen Wasserstoff enthält, zusammen mit dem ersten Tank im Transportschritt transportiert wird.

2. Das Verfahren gemäß Anspruch 1, wobei
im Transportschritt (S4) Wasserstoff aus dem ersten Tank (10) abgelassen und oxidiert wird, um dem Flugzeug Schub und/oder Hilfsenergie zu liefern.

3. Das Verfahren gemäß Anspruch 2, wobei
der Wasserstoff als flüssiger Wasserstoff aus dem ersten Tank (10) abgelassen und vor der Oxidation vergast wird; und
die latente Verdampfungswärme des aus dem ersten Tank (10) abgegebenen Wasserstoffs zum Kühlen eines Flugzeugsystems und/oder des übertragenen Teils verwendet wird.

4. Das Verfahren gemäß einem der Ansprüche 1 bis 3, wobei
gasförmiger Wasserstoff im Transportschritt (S4) aus dem ersten Tank (10) in die Atmosphäre abgelassen wird.

5. Das Verfahren gemäß einem der Ansprüche 1 bis 4, das ferner umfasst
Durchführung einer Steuerung, um zu verhindern, dass der Manometerdruck im ersten Tank (10) im Transportschritt unter einen vorbestimmten Druck fällt, wobei
die Steuerung darin besteht, die Wärmezufuhr zum ersten Tank (10) zu erhöhen und/oder Wasserstoff aus einem zusätzlichen ersten Tank, einem Verdampfungskreislauf oder einem Wärmetauscher in den ersten Tank (10) zu übertragen.

6. Das Verfahren gemäß einem der Ansprüche 1 bis 5, wobei
der erste Tank (10) in einen Rumpf (20) des Flugzeugs (2) geladen, durch den Rumpf (20) entlang einer Längsachse des Flugzeugs (2) zu einer Befestigungsposition bewegt und an der Befestigungsposition am Flugzeug (2) befestigt wird;
wenn sich der erste Tank (10) in die Befestigungsposition bewegt, ein Auslass des ersten Tanks (10), der in Bewegungsrichtung zeigt, in einen Einlass auf der Flugzeugseite eingreift, der in die entgegengesetzte Richtung zeigt, um eine Kupplung zu bilden,
die Kupplung automatisch als Reaktion auf einen Befehl eines Bedieners oder die Bewegung des ersten Tanks (10) in Richtung der Befestigungsposition verriegelt wird,
Wasserstoff aus dem ersten Tank (10) durch die Kupplung abgelassen wird; und
die Kupplung anschließend automatisch als Reaktion auf einen Befehl des Bedieners vor dem Abkoppeln des ersten Tanks (10) entriegelt wird.

7. Das Verfahren gemäß einem der Ansprüche 1 bis 6, wobei
im zweiten Übertragungsschritt (S5) der flüssige Wasserstoff aus dem ersten Tank (10) direkt in einen anderen Tank in einem anderen Flugzeug gepumpt wird, und
die Vergasungs- und Oxidationsschritte (S6, S7) auf dem anderen Flugzeug stattfinden.

8. Das Verfahren gemäß einem der Ansprüche 1 bis 7, wobei die Masse des übertragenen Teils größer als 20 Prozent des Leergewichts des Flugzeugs (2) ist, vorzugsweise größer als 30 Prozent des Leergewichts des Flugzeugs (2).

9. Ein System zur Übertragung von Energie, umfassend:
Mittel zum Erzeugen und Verflüssigen von Wasserstoff;
ein erstes Übertragungsmittel, das konfiguriertist, flüssigen Wasserstoff an einen ersten Ort in einen ersten Tank zu übertragen;
einen ersten Tank (10) und einen zweiten Tank;
ein Flugzeug (2), das den ersten Tank (10) transportieren kann;
ein zweites Übertragungsmittel, das konfiguriert ist, einen übertragenen Teil des flüssigen Wasserstoffs aus dem ersten Tank (10) an einem zweiten Ort zu übertragen; und
ein Vergasungsmittel, das konfiguriert ist, den übertragenen Teil zu vergasen; und
ein Oxidationsmittel, das konfiguriert ist, den vergasten Teil zu oxidieren, um thermische, elektrische oder mechanische Energie zu erzeugen,
**dadurch gekennzeichnet, dass**
der erste Tank (10) konfiguriert ist, an dem Flugzeug (2) befestigt und von diesem gelöst werden zu können, während er flüssigen Wasserstoff enthält, und
das Flugzeug (2) konfiguriert ist, einen zweiten Tank, der flüssigen Wasserstoff enthält, zusammen mit dem ersten Tank (10) zu transportieren.

10. Das System gemäß Anspruch 9, wobei
das Flugzeug (2) konfiguriert ist, Wasserstoff aus dem Tank (10) zu oxidieren, um Schub und/oder Hilfsenergie für das Flugzeug bereitzustellen.

11. Das System gemäß Anspruch 9 oder 10, wobei
das Flugzeug (2) ferner konfiguriert ist, die latente Verdampfungswärme von flüssigem Wasserstoff, der aus dem Tank entnommen wird, zum Kühlen eines Flugzeugsystems und/oder eines Teils des flüssigen Wasserstoffs, der im Tank zurückgehalten oder in den Tank zurückgeführt wird, zu nutzen.

12. Das System gemäß einem der Ansprüche 9 bis 11, wobei das Flugzeug (2) ferner umfasst
Mittel zum Erhöhen der Wärmezufuhr zum Tank (10) und/oder zum Übertragen von Wasserstoff aus einem Zusatztank, einem Verdampfungskreislauf oder einem Wärmetauscher in den Tank; und
eine Steuervorrichtung, die konfiguriert ist, die Mittel zu betätigen, um zu verhindern, dass der Manometerdruck in dem mindestens einen Tank während des Fluges unter einen vorbestimmten Druck fällt.

## Revendications

1. Procédé de transmission d'énergie, comprenant :
une étape de production (S1) d'hydrogène ;
une étape de liquéfaction (S2) consistant à convertir l'hydrogène en hydrogène liquide ;
une première étape de transfert (S3) de l'hydrogène liquide dans un premier réservoir (10) à un premier emplacement ;
une étape de transport (S4) du premier réservoir (10) vers un deuxième emplacement ;
une deuxième étape de transfert (S5) consistant à transférer une partie transmise de l'hydrogène liquide hors du premier réservoir (10) au deuxième emplacement ;
une étape de gazéification (S6) consistant à gazéifier la partie transmise après la deuxième étape de transfert (S5) ;
une étape d'oxydation (S7) consistant à oxyder la partie transmise gazéifiée pour générer de l'énergie thermique, électrique ou mécanique,
**caractérisé en ce que**
dans l'étape de transport, le premier réservoir (10) est transporté en utilisant un avion (2),
le premier réservoir (10) a une structure modulaire, est fixé à l'avion (2) après la première étape de transfert (S3) et détaché de l'avion (2) avant la deuxième étape de transfert (S5), et
un deuxième réservoir contenant de l'hydrogène liquide est transporté avec le premier réservoir lors de l'étape de transport.

2. Procédé selon la revendication 1, dans lequel
lors de l'étape de transport (S4), l'hydrogène est déchargé du premier réservoir (10) et oxydé pour fournir une poussée et/ou une puissance auxiliaire à l'avion.

3. Procédé selon la revendication 2, dans lequel
l'hydrogène est déchargé du premier réservoir (10) sous forme d'hydrogène liquide et gazéifié avant l'oxydation ; et
la chaleur latente d'évaporation de l'hydrogène qui est déchargé du premier réservoir (10) est utilisée pour refroidir un système de l'avion et/ou la partie transmise.

4. Procédé selon l'une quelconque des revendications 1 à 3, dans lequel
l'hydrogène gazeux est déchargé du premier réservoir (10) dans l'atmosphère au cours de l'étape de transport (S4).

5. Procédé selon l'une quelconque des revendications 1 à 4, comprenant en outre
effectuer une commande pour empêcher la pression manométrique dans le premier réservoir (10) de tomber en dessous d'une pression prédéterminée au cours de l'étape de transport, dans lequel
la commande consiste à augmenter l'apport de chaleur au premier réservoir (10) et/ou à transférer de l'hydrogène au premier réservoir (10) à partir d'un premier réservoir auxiliaire, d'un circuit d'évaporation ou d'un échangeur de chaleur.

6. Procédé selon l'une quelconque des revendications 1 à 5, dans lequel
le premier réservoir (10) est chargé dans le fuselage (20) de l'avion (2), déplacé dans le fuselage (20) le long d'un axe longitudinal de l'avion (2) jusqu'à une position de fixation et fixé à l'avion (2) à la position de fixation ;
lorsque le premier réservoir (10) se déplace vers la position de fixation, une sortie du premier réservoir (10) orientée dans la direction du mouvement entre en contact avec une entrée côté avion orientée dans la direction opposée pour former un accouplement ;
l'accouplement est verrouillé automatiquement en réponse à une commande d'un opérateur ou au mouvement du premier réservoir (10) vers la position de fixation ;
l'hydrogène est déchargé du premier réservoir (10) par l'accouplement ; et
l'accouplement est ensuite déverrouillé automatiquement en réponse à une commande de l'opérateur avant le détachement du premier réservoir (10).

7. Procédé selon l'une quelconque des revendications 1 à 6, dans lequel
dans la deuxième étape de transfert (S5), l'hydrogène liquide est pompé du premier réservoir (10) directement vers un autre réservoir sur un autre avion, et
les étapes de gazéification et d'oxydation (S6, S7) ont lieu sur l'autre avion.

8. Procédé selon l'une quelconque des revendications 1 à 7, dans lequel la masse de la partie transmise est supérieure à 20 % du poids à vide de l'avion (2), de préférence supérieure à 30 % du poids à vide de l'avion (2).

9. Système de transmission d'énergie comprenant :
des moyens de production et de liquéfaction de l'hydrogène ;
un premier moyen de transfert configuré pour transférer de l'hydrogène liquide dans un premier réservoir à un premier emplacement ;
le premier réservoir (10) et un deuxième réservoir ;
un avion (2) capable de piloter le premier réservoir (10) ;
des deuxièmes moyens de transfert configurés pour transférer une partie transmise de l'hydrogène liquide hors du premier réservoir (10) à un deuxième emplacement ; et
des moyens de gazéification configurés pour gazéifier la partie transmise ; et
des moyens d'oxydation configurés pour oxyder la partie gazéifiée pour générer de l'énergie thermique, électrique ou mécanique,
**caractérisé en ce que**
le premier réservoir (10) est configuré pour être fixé à l'avion (2) et en être détaché tout en contenant de l'hydrogène liquide, et
l'avion (2) est configuré pour transporter un deuxième réservoir contenant de l'hydrogène liquide avec le premier réservoir (10).

10. Système selon la revendication 9, dans lequel
l'avion (2) est configuré pour oxyder l'hydrogène du réservoir (10) pour prévoir la poussée et/ou la puissance auxiliaire de l'avion.

11. Système selon la revendication 9 ou 10, dans lequel l'avion (2) est en outre configuré pour utiliser la chaleur latente d'évaporation de l'hydrogène liquide qui est tiré du réservoir pour refroidir un système de l'avion et/ou une partie de l'hydrogène liquide qui est retenu dans, ou retourné dans, le réservoir.

12. Système selon l'une quelconque des revendications 9 à 11, dans lequel l'avion (2) comprend en outre
des moyens pour augmenter l'apport de chaleur au réservoir (10) et/ou transférer de l'hydrogène au réservoir à partir d'un réservoir auxiliaire, d'un circuit d'évaporation ou d'un échangeur de chaleur ; et
un dispositif de commande configuré pour actionner les moyens pour empêcher la pression manométrique dans l'au moins un réservoir de tomber en dessous d'une pression prédéterminée pendant le vol.
